(19) Europäisches Patentamt
European Patent Office
Office européen des brevets

(11) **EP 3 520 996 B1**

(12) **EUROPEAN PATENT SPECIFICATION**

(45) Date of publication and mention
of the grant of the patent:
**04.09.2024 Bulletin 2024/36**

(21) Application number: **17855797.1**

(22) Date of filing: **15.09.2017**

(51) International Patent Classification (IPC):
*B29D 7/01* (2006.01)    *G02B 5/30* (2006.01)
*C08J 7/044* (2020.01)    *B29C 55/00* (2006.01)
*B29C 55/08* (2006.01)    *B29C 71/00* (2006.01)
*B29C 71/02* (2006.01)    *G02B 1/16* (2015.01)
*B29K 45/00* (2006.01)    *B29K 23/00* (2006.01)
*B29L 11/00* (2006.01)

(52) Cooperative Patent Classification (CPC):
**C08J 7/044; B29C 71/0063; B29C 71/02;**
**B29D 7/01; G02B 5/3083;** B29C 55/005;
B29C 55/08; B29C 2071/022; B29K 2023/38;
B29K 2045/00; B29K 2995/0005; B29K 2995/0016;
B29K 2995/0041; B29L 2011/0066; G02B 1/16

(86) International application number:
**PCT/JP2017/033573**

(87) International publication number:
**WO 2018/061841 (05.04.2018 Gazette 2018/14)**

(54) **RESIN FILM, CONDUCTIVE FILM AND METHOD FOR PRODUCING THESE FILMS**

HARZFOLIE, LEITFÄHIGE FOLIE UND VERFAHREN ZUR HERSTELLUNG DIESER FOLIEN

FILM DE RÉSINE, FILM CONDUCTEUR ET PROCÉDÉ DE PRODUCTION DE CES FILMS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.09.2016 JP 2016193880**
**31.03.2017 JP 2017072290**

(43) Date of publication of application:
**07.08.2019 Bulletin 2019/32**

(73) Proprietor: **Zeon Corporation**
**Tokyo 100-8246 (JP)**

(72) Inventors:
• **KIKUKAWA, Masaru**
**Tokyo 100-8246 (JP)**
• **HASHIMOTO, Hiromasa**
**Tokyo 100-8246 (JP)**

(74) Representative: **Maiwald GmbH**
**Elisenhof**
**Elisenstraße 3**
**80335 München (DE)**

(56) References cited:
EP-A1- 2 115 071     EP-A1- 3 521 348
WO-A1-2016/067893    WO-A1-2018/180729
JP-A- 2002 328 233   JP-A- 2008 023 986
JP-A- 2010 038 924   JP-A- 2010 286 841
JP-A- 2010 515 108   JP-A- 2014 095 880
JP-A- 2015 196 283   JP-A- 2016 004 256
JP-A- 2016 147 949   JP-A- 2016 147 949
JP-A- 2017 111 189   US-A1- 2007 275 187
US-A1- 2014 104 552  US-A1- 2016 137 794

**Description**

Field

The present invention relates to a resin film and an electroconductive film, and methods for producing them.

Background

As an optical film provided in a display device in prior art such as an image display device, a resin film has been sometimes used (see Patent Literatures 1 to 3).
EP 3 521 348 A1, which represents prior art under Art. 54(3) EPC, describes resin films prepared from a polymer by stretching at a high stretching ratio and a long setting time.
Each of US 2014/104552 A1 and JP 2010-038924 A discloses a resin film comprising a polymer which contains an alicyclic structure and is not crystallizable.
US 2007/275187 A1 relates to a polymer film of cellulose acylate, which is a polymer containing a heterocyclic structure.

Citation List

Patent Literature

    Patent Literature 1: Japanese Patent No. 5283701 B
    Patent Literature 2: Japanese Patent Application Laid-Open No. 2013-010309 A
    Patent Literature 3: International Publication No. 2016/067893

Summary

Technical Problem

A resin film used as an optical film is sometimes required to have a small retardation and a low haze depending on its intended use.
As a resin for use as a material of the resin film, a resin containing a crystallizable polymer is known. The resin containing a crystallizable polymer has excellent properties. Therefore, the present inventor has made an attempt to produce a resin film with the use of such a resin containing a crystallizable polymer.
However, it is difficult to produce a resin film having both a small retardation and a low haze by the prior art techniques with the use of a resin containing a crystallizable polymer for some unknown reasons. Specifically, although there has been a demand for development of a resin film having an in-plane retardation Re of less than 5 nm, a thickness-direction retardation Rth of less than 25 nm, and a haze HZ of less than 3.0%, such a resin film has not been nevertheless achieved.
The present invention has been made in view of these circumstances, and it is an object of the present invention to provide a resin film containing a crystallizable polymer and having both a small retardation and a low haze and a method for producing the same; and an electroconductive film including a resin film containing a crystallizable polymer and having both a small retardation and a low haze and a method for producing the same.

Solution to Problem

    <1> A resin film comprising a crystallizable polymer,

        the crystallizable polymer having a melting point Mp that can be observed by a differential scanning calorimeter at a temperature rise rate of 10 °C/min,
        the crystallizable polymer being an alicyclic structure-containing polymer,
        an in-plane retardation Re of the resin film measured at a wavelength of 590 nm being less than 5 nm,
        a thickness-direction retardation Rth of the resin film measured at a wavelength of 590 nm being less than 25 nm,
        a haze HZ of the resin film being less than 3.0%,

wherein the haze HZ is measured using a haze meter for a sample of the resin film obtained by cutting the resin film around the central part of the resin film into a square piece of 50 mm × 50 mm,
characterized in that
the melting point Mp of the crystallizable polymer is 200 °C or higher, and
an in-plane retardation fluctuation DRe of the resin film determined by the following formula (A1) is 0.5 nm or less:

$$\Delta Re = Re(max) - Re(min) \quad (A1)$$

wherein
Re(max) and Re(min) are maximum and minimum of in-plane retardation values measured at a plurality of points about 50 cm away from the central part of the resin film toward both the edges in the width direction of the resin film, or at a plurality of points each of which is about 50 cm away from the central part of the resin film in one arbitrary direction when the resin film is a film whose width direction cannot be defined.

<2> An electroconductive film comprising:

the resin film according to <1> and
an electroconductive layer disposed on the resin film.

<3> A method for producing a resin film as defined under <1>, comprising

a step (I) of preparing a long-length pre-stretch film containing the crystallizable polymer;
a step (V) of pre-heating the pre-stretch film for a pre-heating time of 1 second or more and 60 seconds or less;
a step (II) of stretching the pre-stretch film at a stretching temperature of Tg - 50°C to Tg + 50°C and stretching ratio of 1.01 times or more and 1.20 times or less in a width direction to obtain a stretched film; and
a step (III) of adjusting a temperature of the stretched film to a crystallization temperature of Mp - 120°C to Mp for a crystallization time of 25 seconds or less while keeping a state where two or more edges of the stretched film are held, to obtain the resin film, wherein
Tg represents the glass transition temperature of the crystallizable polymer that is observed by a differential scanning calorimeter at a temperature rise rate of 10°C/min. Preferred embodiments will become apparent from the following description and the detached dependent claims.

Advantageous Effects of Invention

According to the present invention, a resin film containing a crystallizable polymer and having both a small retardation and a low haze and a method for producing the same; and an electroconductive film including a resin film containing a crystallizable polymer and having both a small retardation and a low haze and a method for producing the same can be provided.

Brief Description of Drawings

FIG. 1 is a plan view schematically illustrating an example of a holding device.
FIG. 2 is a plan view schematically illustrating an example of a holding device.
FIG. 3 is a front view schematically illustrating an example of an apparatus for producing a resin film.
FIG. 4 is a plan view schematically illustrating the example of the apparatus for producing a resin film.

Description of Embodiments

Hereinafter, the present invention will be described in detail with reference to embodiments and examples.
In the following description, an in-plane retardation Re of a film is a value represented by $Re = (nx - ny) \times d$, unless otherwise specified. A thickness-direction retardation Rth of a film is a value represented by $Rth = \{(nx + ny)/2 - nz\}$, unless otherwise specified. Herein, nx represents a refractive index in a direction in which the maximum refractive index is given among directions perpendicular to the thickness direction of the film (in-plane directions), ny represents a refractive index in a direction, among the above-mentioned in-plane directions of the film, orthogonal to the direction giving nx, nz represents a refractive index in the thickness direction of the film, and d represents the thickness of the film. The measurement wavelength of the retardation is 590 nm unless otherwise specified.

In the following description, a "long-length" film refers to a film with the length that is 5 times or more the width, and preferably a film with the length that is 10 times or more the width, and specifically refers to a film having a length that allows a film to be wound up into a rolled shape for storage or transportation. The upper limit of the length of the long-length film is not particularly limited, and is, for example, 100,000 times or less.

In the following description, a direction of an element being "parallel", "perpendicular", and "orthogonal" may allow an error within the range of not impairing the advantageous effects of the present invention, for example, within a range of $\pm 5°$, unless otherwise specified.

In the following description, the lengthwise direction of the long-length film is usually parallel to a film conveyance direction in the production line.

[1. Resin film]

The resin film according to the present invention is a film containing a crystallizable polymer. Therefore, the resin film is formed of a resin containing a crystallizable polymer. In the following description, the resin containing a crystallizable polymer is sometimes referred to as a "crystallizable resin". The resin film has a small in-plane retardation Re, a small thickness-direction retardation Rth, and a small haze HZ, and further usually has excellent heat resistance.

[1.1. Crystallizable Resin]

The crystallizable resin includes a crystallizable polymer. Herein, the crystallizable polymer means a polymer having crystallizability. The polymer having crystallizability refers to a polymer having a melting point Mp. Specifically, the polymer having crystallizability refers to a polymer of which a melting point Mp can be observed by a differential scanning calorimeter (DSC).

The crystallizable polymer is an alicyclic structure-containing polymer having crystallizability (see Japanese Patent Application Laid-Open No. 2011-118137 A), which is preferable because of its excellent transparency, low hygroscopicity, size stability, and light-weight properties.

The alicyclic structure-containing polymer refers to a polymer that has an alicyclic structure in the molecule and is obtainable by a polymerization reaction using a cyclic olefin as a monomer, or a hydrogenated product thereof. As the alicyclic structure-containing polymer, one type thereof may be solely used, and two or more types thereof may also be used in combination at any ratio.

Examples of the alicyclic structure contained in the alicyclic structure-containing polymer may include a cycloalkane structure, and a cycloalkene structure. Among these, a cycloalkane structure is preferable from the viewpoint of easily obtaining a resin film excellent in properties such as thermal stability. The number of carbon atoms contained per alicyclic structure is preferably 4 or more, and more preferably 5 or more, and is preferably 30 or less, more preferably 20 or less, and particularly preferably 15 or less. When the number of carbon atoms contained in one alicyclic structure falls within the aforementioned range, mechanical strength, heat resistance, and moldability are highly balanced.

In the alicyclic structure-containing polymer, the ratio of the structural unit having an alicyclic structure relative to all structural units is preferably 30% by weight or more, more preferably 50% by weight or more, and particularly preferably 70% by weight or more. When the ratio of the structural unit having an alicyclic structure in the alicyclic structure-containing polymer is increased as described above, heat resistance can be enhanced.

The rest of the alicyclic structure-containing polymer other than the structural unit having an alicyclic structure is not particularly limited, and may be appropriately selected depending on the purposes of use.

Examples of the alicyclic structure-containing polymer having crystallizability may include the following polymer ($\alpha$) to polymer ($\delta$). Among these, the polymer ($\beta$) is preferable as the alicyclic structure-containing polymer having crystallizability because a resin film having excellent heat resistance can be easily obtained therewith.

Polymer ($\alpha$): a ring-opening polymer of a cyclic olefin monomer having crystallizability
Polymer ($\beta$): a hydrogenated product of the polymer ($\alpha$) having crystallizability
Polymer ($\gamma$): an addition polymer of a cyclic olefin monomer having crystallizability
Polymer ($\delta$): a hydrogenated product and the like of the polymer ($\gamma$) having crystallizability

Specifically, the alicyclic structure-containing polymer is more preferably a ring-opening polymer of dicyclopentadiene having crystallizability or a hydrogenated product of the ring-opening polymer of dicyclopentadiene having crystallizability, and is particularly preferably a hydrogenated product of the ring-opening polymer of dicyclopentadiene having crystallizability. Herein, the ring-opening polymer of dicyclopentadiene refers to a polymer in which the ratio of a structural unit derived from dicyclopentadiene relative to all structural units is usually 50% by weight or more, preferably 70% by weight or more, more preferably 90% by weight or more, and further preferably 100% by weight.

The alicyclic structure-containing polymer having crystallizability as described above may be produced by, for example, the method described in International Publication No. 2016/067893.

The melting point Mp of the crystallizable polymer is 200°C or higher, and preferably 230°C or higher, and is preferably 290°C or lower. By using the crystallizable polymer having such a melting point Mp, a resin film having even better balance of moldability and heat resistance can be obtained.

The glass transition temperature Tg of the crystallizable polymer is not particularly limited, but is usually 85°C or higher and is usually 170°C or lower.

The weight-average molecular weight (Mw) of the crystallizable polymer is preferably 1,000 or more, and more preferably 2,000 or more, and is preferably 1,000,000 or less, and more preferably 500,000 or less. The crystallizable polymer having such a weight-average molecular weight has excellent balance of molding processability and heat resistance.

The molecular weight distribution (Mw/Mn) of the crystallizable polymer is preferably 1.0 or more, and more preferably 1.5 or more, and is preferably 4.0 or less, and more preferably 3.5 or less. Herein, Mn represents a number-average molecular weight. The crystallizable polymer having such a molecular weight distribution has excellent molding processability.

The weight-average molecular weight (Mw) and the molecular weight distribution (Mw/Mn) of the crystallizable polymer may be measured as a polystyrene-equivalent value by gel permeation chromatography (GPC) using tetrahydrofuran as a developing solvent.

The crystallizable polymer may not be crystallized prior to production of the resin film. However, after production of the resin film, the crystallizable polymer contained in the resin film is usually crystallized and may thereby have a high crystallization degree. The specific range of the crystallization degree may be appropriately selected depending on the desired performances, and preferably 10% or more, and more preferably 15% or more. When the crystallization degree of the crystallizable polymer contained in the resin film is equal to or more than the lower limit value of the aforementioned range, high heat resistance and chemical resistance can be imparted to the resin film. The crystallization degree of the crystallizable polymer may be measured by an X-ray diffraction method.

The ratio of the crystallizable polymer in the crystallizable resin is preferably 50% by weight or more, more preferably 70% by weight or more, and particularly preferably 90% by weight or more. When the ratio of the crystallizable polymer is equal to or more than the lower limit value of the aforementioned range, heat resistance of the resin film can be effectively enhanced.

The crystallizable resin may contain an optional component in addition to the crystallizable polymer. Examples of the optional components may include an antioxidant such as a phenol-based antioxidant, a phosphorus-based antioxidant, and a sulfur-based antioxidant; a light stabilizer such as a hindered amine-based light stabilizer; a wax such as a petroleum-based wax, a Fischer-Tropsch wax, and a polyalkylene wax; a nucleating agent such as a sorbitol-based compound, a metal salt of an organic phosphoric acid, a metal salt of an organic carboxylic acid, kaolin, and talc; a fluorescent brightener such as a diaminostilbene derivative, a coumarin derivative, an azole-based derivative (for example, a benzoxazole derivative, a benzotriazole derivative, a benzimidazole derivative, and a benzothiazole derivative), a carbazole derivative, a pyridine derivative, a naphthalic acid derivative, and an imidazolone derivative; an ultraviolet absorber such as a benzophenone-based ultraviolet absorber, a salicylic acid-based ultraviolet absorber, and a benzotriazole-based ultraviolet absorber; an inorganic filler such as talc, silica, calcium carbonate, and glass fiber; a colorant; a flame retardant; a flame retardant auxiliary; an antistatic agent; a plasticizer; a near-infrared absorber; a lubricant; a filler, and an optional polymer other than the crystallizable polymer such as a soft polymer. As the optional component, one type thereof may be solely used, and two or more types thereof may also be used in combination at any ratio.

[1.2. Properties of resin film]

The resin film has a small in-plane retardation Re and a small thickness-direction retardation Rth. Specifically, the in-plane retardation Re of the resin film is less than 5 nm, preferably less than 3 nm, more preferably less than 1, and ideally 0 nm. The thickness-direction retardation Rth of the resin film is less than 25 nm, preferably less than 20 nm, and more preferably less than 10 nm. The resin film having such a small in-plane retardation Re and a small thickness-direction retardation Rth can suitably be used for various purposes in the field of optics. The lower limit of the thickness-direction retardation Rth of the resin film is not particularly limited, and is ideally 0 nm, but is usually 5 nm or more. By setting the in-plane retardation Re and the thickness-direction retardation Rth of the resin film to such desired values, when the resin film is used in a display device, coloring of a display screen can be suppressed and viewing angle properties can be improved.

The in-plane retardation Re and the thickness-direction retardation Rth of the resin film may be determined as average values of the values measured at a plurality of points in the central part of the resin film having a diameter of 50 mm. When the resin film is a long-length film, the in-plane retardation Re and the thickness-direction retardation Rth of the resin film may be determined as average values of the values measured at a plurality of points in the width-direction center of the long-length film.

The fluctuations of the in-plane retardation Re and the thickness-direction retardation Rth of the resin film are preferably small. Specifically, the fluctuation of the in-plane retardation Re is 0.5 nm or less. Further, the fluctuation of the thickness-direction retardation Rth is preferably 8 nm or less, more preferably 5 nm or less, and particularly preferably 3 nm or less.

The fluctuation of the retardation of the resin film may be measured by the following method.

The in-plane retardation and the thickness-direction retardation are measured at a plurality of points about 50 cm away from the central part of the resin film toward both the edges in the width direction of the resin film. For example, when the resin film is a film whose width direction cannot be defined, such as a square film or a circular film, the in-plane retardation and the thickness-direction retardation are measured at a plurality of points about 50 cm away from the central part of the resin film in one arbitrary direction. The fluctuation $\Delta$Re of the in-plane retardation Re and the fluctuation $\Delta$Rth of the thickness-direction retardation Rth are determined by the following formulas (A1) and (A2) using measured maximum in-plane retardation Re(max), maximum thickness-direction retardation Rth(max), minimum in-plane retardation Re(min), and minimum thickness-direction retardation Rth(min).

$$\Delta Re = Re(max) - Re(min) \quad (A1)$$

$$\Delta Rth = Rth(max) - Rth(min) \quad (A2)$$

The resin film has a small haze HZ. Specifically, the haze HZ of the resin film is less than 3.0%, preferably less than 2%, more preferably less than 1%, and ideally 0%. The resin film having such a small haze HZ can be suitably used as an optical film.

The haze HZ of the resin film may be measured using a haze meter for a sample obtained by cutting a resin film around the central part of the resin film into a square piece of 50 mm $\times$ 50 mm.

The resin film is usually excellent in heat resistance. Specifically, the heat resistance temperature of the resin film is usually 150°C or higher. The resin film having such a high heat resistance temperature can be suitably used in applications requiring heat resistance such as a resin film for vehicles.

The heat resistance temperature of the resin film may be measured by the following method. Without applying a tensile force to the resin film, the resin film is left in an atmosphere of a certain evaluation temperature for 10 minutes. After that, the surface state of the resin film is visually checked. When irregularities cannot be confirmed on the surface shape of the resin film, it can be determined that the heat resistance temperature of the resin film is equal to or higher than the above-mentioned evaluation temperature.

It is preferable that the resin film has high total light transmittance. Specifically, the total light transmittance of the resin film is preferably 80% or more, more preferably 85% or more, and particularly preferably 88% or more. The total light transmittance of the resin film may be measured in the wavelength range of 400 nm to 700 nm using an ultraviolet-visible spectrometer.

The resin film usually has excellent folding endurance. Specifically, the folding endurance of the resin film may be expressed as the degree of folding endurance. The degree of folding endurance of the resin film is usually 2000 cycles or more, preferably 2200 cycles or more, and more preferably 2400 cycles or more. The degree of folding endurance is preferably as high as possible, and therefore the upper limit of the degree of folding endurance is not particularly limited. However, the degree of folding endurance is usually 100000 cycles or less.

The degree of folding endurance of the resin film may be measured in the following manner by an MIT folding endurance test based on JIS P8115 "Paper and board-Determination of folding endurance - MIT method".

A test piece having a width of 15 mm $\pm$ 0.1 mm and a length of about 110 mm is cut out from a resin film as a sample. At this time, the test piece is prepared so that a direction in which the resin film is more strongly stretched is parallel to the about 110 mm-long edge of the test piece. Then, the test piece is folded using an MIT folding endurance tester ("No. 307" manufactured by Yasuda Seiki Seisakusho, Ltd.) under conditions of a load of 9.8 N, a curvature of a bent section of 0.38 $\pm$ 0.02 mm, a folding angle of 135° $\pm$ 2°, and a folding speed of 175 cycles/min in such a manner that a folding line appears in the width direction of the test piece. The folding in such a manner is repeatedly performed to measure the number of reciprocating folding cycles until the test piece breaks.

Ten test pieces are prepared, and the number of reciprocating folding cycles before the test piece breaks is measured by the above-described method ten times. The average of 10 measurement values measured in this manner is adopted as the degree of folding endurance (MIT fold number) of the resin film.

Further, the resin film usually has excellent folding resistance. Specifically, the number of test cycles to fracture of the resin film measured by a tension-free U-shape folding test is preferably 50000 cycles or more, more preferably 100000 cycles or more, particularly preferably 200000 cycles or more. Herein, the tension-free U-shape folding test refers to a test in which a horizontally-placed rectangular film is repeatedly folded in such a manner that the U-shaped portion of the film extends downward in the direction of gravitational force by bringing two parallel edges of the film close to each other in the horizontal direction without applying a load in the thickness direction of the film. When the resin film has higher folding resistance, the resin film is more freely bent and more easily folded, and therefore can be used for flexible displays having various shapes. In particular, an organic electroluminescent display has self-luminous properties and requires no backlight unlike a liquid crystal display, and is therefore particularly preferably as a flexible display. Therefore, the resin film is particularly suitably used for organic electroluminescent displays. Further, the resin film having high folding resistance is a useful plastic material.

Measurement of the number of test cycles to fracture of the film by the tension-free U-shape folding test may be performed in the following manner.

The film as a sample is subjected to a tension-free U-shape folding test using a desktop model endurance test machine ("DLDMLH-FS" manufactured by Yuasa System Co., Ltd.). In this test, the film is repeatedly folded under conditions of a width of 50 mm, a bend radius of 1 mm, and a folding speed of 80 cycles/min. The test machine is stopped every 1000 cycles until the number of folding cycles reaches 10000 cycles and every 5000 cycles after the number of folding cycles exceeds 10000 cycles in order to visually observe the film. When the film has broken, the number of folding cycles at this time point is adopted as the "number of test cycles to fracture". When even slight cracking occurs in the film, the film is evaluated as "cracked". The tension-free U-shape folding test is performed four times with the upper limit of the number of folding cycles being 200000 cycles. The average number of test cycles to fracture or the average number of test cycles to cracking obtained from the results of the 4-time tests are used as an evaluation result.

The resin film is usually excellent in low water absorption. Specifically, the low water absorption of the resin film may be expressed by water absorption rate. The water absorption rate of the resin film is usually 0.1% or less, preferably 0.08% or less, and more preferably 0.05% or less.

The water absorption rate of the resin film may be measured by the following method.

A test piece is cut out from a resin film as a sample, and the weight of the test piece is measured. After that, the test piece is immersed in water at 23°C for 24 hours, and the weight of the test piece after immersion is measured. Then, the ratio of the weight of the test piece increased by immersion relative to the weight of the test piece before immersion may be calculated as the water absorption rate (%).

The residual solvent amount of the resin film is 1.0% by weight or less, more preferably 0.5% by weight or less, and further preferably 0.1% by weight or less. When the residual solvent amount is regulated to this desired value, curling amount of the resin film main body can be suppressed. The residual solvent amount may be usually obtained by gas chromatography.

[1.3. Thickness of Resin Film]

The thickness of the resin film may be appropriately selected depending on the use application. The specific thickness of the resin film is preferably 1 μm or more, more preferably 3 μm or more, and particularly preferably 10 μm or more, and is preferably 1 mm or less, more preferably 500 μm or less, and particularly preferably 200 μm or less. When the thickness of the resin film is equal to or more than the lower limit value of the aforementioned range, high mechanical strength can be obtained. When the thickness thereof is equal to or less than the upper limit value, winding in producing a long-length film can be made possible.

[1.4. Use Application of Resin Film]

The resin film may be used for any use applications. Among others, the resin film is suitable as, for example, an optical film such as an optically isotropic film and a film for electric and electronic use. Examples of the optical film may include a polarizing plate protective film for a liquid crystal display device, a protective film for an organic EL display device, and a substrate film such as an optical multilayer film. The resin film may be used as an optical compensation film when used together with other phase difference film. Examples of the optical multilayer film may include a barrier film, and an electroconductive film. Examples of the barrier film may include a substrate plate film for an organic EL element, a sealing film, and a sealing film of a solar cell. Examples of the electroconductive film may include flexible electrodes for an organic EL element and for a photoelectric transducer such as a solar cell, and a touch panel member. Examples of the film for electric and electronic use may include a flexible wiring substrate plate, and an insulating material for a film condenser.

[2. Method for Producing Resin Film]

The above-described resin film may be stably produced by a production method including: a step (I) of preparing a long-length pre-stretch film containing a crystallizable polymer; a step (V) of pre-heating the pre-stretch film for a specific pre-heating time; a step (II) of stretching the pre-stretch film in a width direction under specific stretching conditions to obtain a stretched film; and a step (III) of adjusting a temperature of the stretched film to a specific crystallization temperature for a specific crystallization time in a state where two or more edges of the stretched film are held.

[2.1. Step of Preparing Pre-stretch Film (Step (I)]

The pre-stretch film is a film formed of a crystallizable resin. This pre-stretch film may be produced by a resin molding method such as an injection molding method, an extrusion molding method, a press molding method, an inflation molding method, a blow molding method, a calendar molding method, a cast molding method, or a compression molding method. Among these, it is preferable to produce the pre-stretch film by an extrusion molding method since thereby its thickness can be easily controlled.

When the pre-stretch film is produced by the extrusion molding method, the production conditions in the extrusion molding method are preferably as follows. The cylinder temperature (melted resin temperature) is preferably Mp or higher, and more preferably "Mp + 20°C" or higher, and is preferably "Mp + 100°C" or lower, and more preferably "Mp + 50°C" or lower. The casting roll temperature is preferably "Tg - 50°C" or higher, and is preferably "Tg + 70°C" or lower, and more preferably "Tg + 40°C" or lower. Further, the cooling roll temperature is preferably "Tg - 70°C" or higher, and more preferably "Tg - 50°C" or higher, and is preferably "Tg + 60°C" or lower, and more preferably "Tg + 30°C" or lower. When the pre-stretch film is produced under such conditions, the pre-stretch film suitable for production of the resin film can be produced.

The pre-stretch film is prepared as a long-length film. The long-length pre-stretch film as it is may be subjected to the steps after the step (I). Further, the pre-stretch film may be cut into any size to obtain a film in a sheet piece shape, and the film in a sheet piece shape may be subjected to the steps after the step (I).

[2.2. Step of Pre-heating Pre-stretch Film (Step (V))

The method for producing the resin film includes the step (V) of pre-heating the pre-stretch film before the step (II). In this pre-heating, the temperature of the pre-stretch film is adjusted to a specific pre-heating temperature. The pre-heating is usually performed immediately before the step (II), and thus the pre-heated pre-stretch film is continuously subjected to the step (II) without being subjected to other steps.

The pre-heating temperature may be set to fall within the range within which the stretching temperature may fall in the step (II). The specific pre-heating temperature is preferably Tg - 50°C or higher, more preferably Tg - 40°C or higher, and particularly preferably Tg - 30°C or higher, and is preferably Tg + 50°C or lower, more preferably Tg + 40°C or lower, and particularly preferably Tg + 30°C or lower. In the step (V), the pre-heating temperature may be fluctuated within the aforementioned range, but is preferably constant. The pre-heating temperature at which the pre-stretch film is adjusted at the time of pre-heating may be different from the stretching temperature in the step (II), but is preferably a temperature close to the stretching temperature, and more preferably is the same temperature as the stretching temperature.

When the pre-heating temperature is equal to or more than the lower limit value of the aforementioned range, a reduction in the uniformity of thickness in the step (III) of crystallizing the stretched film can be prevented. In addition, when the pre-heating temperature is equal to or less than the upper limit value of the aforementioned range, stretching defect in the step (II) can be effectively suppressed, and a reduction in the uniformity of thickness in the step (III) can be effectively suppressed. Furthermore, when the pre-heating temperature is equal to or less than the upper limit value of the aforementioned range, usually the haze HZ of the resulting resin film can be effectively reduced.

The pre-heating time during which the temperature of the pre-stretch film is confined within the aforementioned pre-heating temperature range is 1 second or more, more preferably 5 seconds or more, and particularly preferably 10 seconds or more, and is 60 seconds or less, preferably 40 seconds or less, and particularly preferably 30 seconds or less. When the pre-heating time falls within the aforementioned range, the retardations Re and Rth and the haze HZ of the resin film can be reduced. In addition, usually, when the pre-heating time is confined within the aforementioned range, stretching defect in the step (II) can be effectively suppressed, and reduction in the uniformity of thickness in the step (III) can be effectively suppressed. Furthermore, when the pre-heating time is equal to or lower than the upper limit value of the aforementioned range, it is usually possible to effectively reduce the haze of the resulting resin film.

The pre-heating may usually be performed using a heating device capable of heating the pre-stretch film without being in contact with the pre-stretch film. Examples of such a heating device may include an oven and a heating furnace. When the pre-heating is performed using these heating devices, the pre-heating time corresponds to the time during which the pre-stretch film is exposed to the above-described pre-heating temperature atmosphere.

Similarly to the below-described step (III), it is preferable that the pre-heating is performed while keeping a state where two or more edges of the pre-stretch film are held. By performing the pre-heating in a state where two or more edges of the pre-stretch film are held, deformation of the pre-stretch film by thermal shrinkage in a region between the held edges can be suppressed.

[2.3. Stretching Step (Step (II))

After the pre-stretch film is pre-heated, the step (II) of stretching the pre-stretch film in the width direction to obtain a stretched film is performed. Herein, the width direction refers to the width direction of the pre-stretch film. Therefore, when the pre-stretch film is a long-length film, stretching in the step (II) is performed in the width direction of the long-length pre-stretch film. In the case where the pre-stretch film is a film in a sheet piece shape obtained by cutting out a long-length pre-stretch film, stretching in the step (II) is performed in a direction corresponding to the width direction of the long-length pre-stretch film before being cut out.

By the above-described stretching, refractive index anisotropy of the pre-stretch film which may occur when the long-length pre-stretch film is produced can be eliminated, so that the retardation of the resin film can be reduced. In addition, the occurrence of large crystal grains can be suppressed even when the crystallization in the step (III) proceeds due to the stretching. Thus, whitening due to crystal grains can be suppressed, so that the haze HZ of the resin film can be reduced.

The stretching temperature in the step (II) is Tg - 50°C or higher, preferably Tg - 40°C or higher, more preferably Tg - 30°C or higher, and particularly preferably Tg + 10°C or higher, and is Tg + 50°C or lower, preferably Tg + 40°C or lower, and more preferably Tg + 30°C or lower. In the step (II), the stretching temperature may be fluctuated within the aforementioned range, but is preferably constant. When the stretching is performed at the aforementioned stretching temperature, the retardations Re and Rth and the haze of the resin film can be reduced.

The stretching ratio in the step (II) is 1.01 times or more, preferably 1.03 times or more, and more preferably 1.05 times or more, and is 1.20 times or less, preferably 1.18 times or less, and particularly preferably 1.15 times or less. When the stretching is performed with the aforementioned stretching ratio, the retardations Re and Rth and the haze HZ of the resin film can be effectively reduced. In particular, it is an unexpected effect that, when the stretching ratio is set to be equal to or more than the lower limit value of the aforementioned range, the retardations Re and Rth of the resin film can be effectively reduced as compared with the case where stretching is not performed at all.

The stretching in the step (II) is usually performed by a uniaxial stretching treatment in the width direction. Herein, the uniaxial stretching treatment refers to a stretching treatment wherein stretching is performed only in one stretching direction and stretching in other directions is not performed. Further, it is preferable that the uniaxial stretching treatment is performed by a fixed-end uniaxial stretching treatment which does not cause a size change in an in-plane direction perpendicular to the stretching direction. By such a stretching treatment, the retardations Re and Rth and the haze HZ of the resin film can be effectively reduced.

[2.4. Crystallization Step (Step (III))]

After the stretched film is obtained, the step (III) is performed to crystallize the crystallizable polymer contained in the stretched film. In the step (III), crystallization treatment is performed by adjusting the temperature of the stretched film to a specific crystallization temperature while keeping a state where two or more edges of the stretched film are held. By This crystallization treatment, the crystallizable polymer can be crystallized to obtain a resin film. As a result of progression of the crystallization of the crystallizable polymer, heat resistance of the resin improves, and thereby deformation in a high temperature environment can be prevented. In the following description, the resin film that has not been thermally shrunk yet may be appropriately referred to as a "crystallized film" in order to distinguish it from the resin film thermally shrunk in the below-described step (IV).

The stretched film is usually subjected to a crystallization treatment while keeping a state where its edges including two or more edges at width-direction ends of the stretched film are held. The edges of the stretched film are usually held such that the held stretched film is not shrunk. The held stretched film is usually in a state under tension with a tensile force applied thereto and does not sag. Therefore, the stretched film is maintained flat at the crystallization temperature and is prevented from being deformed by thermal shrinkage. Herein, the phrase "film is maintained flat" means that the film is maintained in a planar shape to prevent the film from causing deformation such as waving or wrinkling. However, this state of being held in such a manner does not include a state where the held stretched film is substantially stretched. The phrase "substantially stretched" means that the stretching ratio of the stretched film in any direction is usually 1.01 times or more.

When the stretched film is held, usually the edges of the stretched film are held by an appropriate holding tool. The holding tool may be one that can continuously hold the edges of the stretched film over the entire length thereof or one that can intermittently hold the edges of the stretched film at intervals. For example, the edges of the stretched film may be intermittently held by holding tools disposed at specific intervals.

In order to prevent the deformation of a wide area of the stretched film, it is preferable to hold edges including two opposing edges. For example, in the case of the stretched film in a rectangular sheet piece shape, the deformation of the stretched film in a sheet piece shape can be prevented over the entire surface thereof by holding two opposing edges (e.g., two long edges or two short edges). In the case of the long-length stretched film, the deformation of the long-length stretched film can be prevented over the entire surface thereof by holding two edges at width-direction ends (i.e., by holding the long edges). The stretched film, which is prevented from being deformed in such a manner, is prevented from being causing deformation such as wrinkling even when stress is generated in the film by thermal shrinkage. In particular, when the stretched film is obtained by stretching in the width direction as described above, deformation is more reliably prevented by holding two or more edges perpendicular to the width direction, i.e., the stretching direction.

In order to more reliably prevent deformation in the step (III), it is preferable to hold a larger number of edges. For example, in the case of the stretched film in a sheet piece shape, it is preferable to hold all edges thereof. Specifically, in the case of the stretched film in a rectangular sheet piece shape, it is preferable to hold four edges.

The holding tool that can hold the edges of the stretched film is preferably one that does not come into contact with a portion other than the edges of the stretched film. By using such a holding tool, a resin film having more excellent smoothness can be obtained.

Further, it is preferable that the holding tools are capable of fixing relative positions therebetween in the step (III). When such holding tools are used, the relative positions of such holding tools do not change in the step (III), and therefore substantial stretching of the stretched film in the step (III) can be easily prevented.

For example, the preferable holding tools for holding a rectangular stretched film are grippers, such as clips, that are provided on a frame at specific intervals so as to be able to grip the edges of the stretched film. Further, the holding tools for holding the two edges of a long-length stretched film at the width-direction ends of the film are, for example, grippers that are provided in a tenter stretching machine so as to be able to grip the edges of the stretched film.

When a long-length stretched film is used, edges at the lengthwise-direction ends (i.e., short edges) of the stretched film may be held. Instead of holding the aforementioned edges, the both sides of a region in the lengthwise direction of the stretched film to be subjected to the crystallization treatment may be held. For example, holding devices that can hold the stretched film may be provided on both sides of a region in the lengthwise direction of the stretched film to be subjected to a crystallization treatment. Examples of such holding devices may include a combination of two rolls and a combination of an extruder and a take-up roll. By applying a tensile force, such as feeding tension, to the stretched film with the use of such a combination of holding devices, it is possible to prevent thermal shrinkage of the stretched film in a region subjected to a crystallization treatment. Therefore, by using such a combination as the holding devices, the stretched film can be held while feeding the film in the lengthwise direction, which makes it possible to efficiently produce a resin film.

In the step (III), as described above, the temperature of the stretched film is adjusted to a specific crystallization temperature while keeping a state where two or more edges of the stretched film are held. By adjusting the temperature of the stretched film to a crystallization temperature, the crystallization of the crystallizable polymer progresses. Therefore, by performing the step (III), a crystallized film containing the crystallized crystallizable polymer can be obtained. At this time, since the deformation of the crystallized film is prevented, crystallization is allowed to progress without impairing the smoothness of the crystallized film.

The crystallization temperature in the step (III) is Mp - 120°C or higher, preferably Mp - 115°C or higher, more preferably Mp - 100°C or higher, and particularly preferably Mp - 90°C or higher, and is Mp or lower, preferably Mp - 10°C or lower, more preferably Mp - 20°C or lower, and particularly preferably Mp - 60°C or lower. In the step (III), the crystallization temperature may be fluctuated within the aforementioned range, but is preferably constant. When the crystallization temperature is not lower than the lower limit of the aforementioned range, progression of the crystallization of the crystallizable polymer can be effectively promoted and heat resistance of the film can be enhanced. Further, when the crystallization temperature is equal to lower than the upper limit value of the aforementioned range, clouding of the film can be suppressed, so that the resin film with small haze HZ can be obtained.

When the temperature of the stretched film is brought to the temperature as described above, the stretched film is usually heated. As the heating device used in this process, a heating device capable of raising the ambient temperature of the stretched film is preferable because contact of the heating device with the stretched film is unnecessary. Specific examples of suitable heating devices may include an oven and a heating furnace.

In the step (III), the crystallization time for maintaining the stretched film within the aforementioned crystallization temperature range is preferably 10 seconds or more, more preferably 15 seconds or more, and particularly preferably 20 seconds or more, and is 25 seconds or less. When the crystallization time is equal to or more than the lower limit value of the aforementioned range, progression of the crystallization of the crystallizable polymer can be sufficiently promoted, so that the heat resistance of the resin film can be enhanced. When the crystallization time is equal to or lower than the upper limit value of the aforementioned range, clouding of the resin film can be suppressed, so that a resin film with small haze can be obtained.

[2.5. Relaxation Step (Step (IV))]

It is preferable that, after the crystallized film is obtained, the step (IV) is performed to thermally shrink the crystallized film. In the step (IV), a relaxation treatment is performed to thermally shrink the crystallized film at a specific relaxation temperature. For example, when the crystallized film is under tension in the step (III), the tension of the crystallized film is released to thermally shrink the crystallized film in the width direction. By the thermal shrinkage of the crystallized film, stress remaining in the crystallized film is removed, so that a resin film is obtained. Since the residual stress is removed, the resin film is less likely to cause thermal shrinkage in a high-temperature environment and is therefore less likely to deform. Accordingly, a resin film having excellent heat resistance can be obtained.

In the step (IV), it is preferable that the relaxation treatment is performed while keeping a state where two or more edges of the crystallized film are held. In particular, it is more preferable that the relaxation treatment is performed while keeping a state where edges including two or more edges at width-direction ends of the crystallized film are held. By holding two or more edges of the crystallized film in such a manner, excessive shrinkage of the crystallized film during thermal shrinkage is prevented. Accordingly, the occurrence of wrinkling can be effectively prevented in the step (IV).

In the step (IV), it is particularly preferable that the thermal shrinkage of the crystallized film is performed while the crystallized film is maintained flat. This makes it possible to effectively prevent the resulting resin film from causing deformation such as waving or wrinkling.

The thermal shrinkage of the crystallized film may be performed at a time or may be performed in a continuous or stepwise manner over a period of time. However, in order to effectively prevent a resulting resin film from causing deformation such as waving or wrinkling, it is preferable that the thermal shrinkage is performed in a continuous or stepwise manner.

The relaxation temperature in the step (IV) is usually Tg or higher, preferably Tg + 40°C or higher, and more preferably Tg + 60°C or higher, and is usually MP or lower, preferably Mp - 50°C or lower, and more preferably Mp - 100°C or lower. In the step (IV), the relaxation temperature may be fluctuated within the aforementioned range, but is preferably constant. By performing the relaxation treatment at the aforementioned relaxation temperature, residual stress can be effectively removed, and thereby a resin film having an excellent heat resistance can be obtained.

In the step (IV), the treatment time for thermally shrinking the crystallized film at the aforementioned relaxation temperature is preferably 1 second or more, more preferably 3 seconds or more, and particularly preferably 5 seconds or more, and is preferably 100 seconds or less, more preferably 80 seconds or less, and particularly preferably 50 seconds or less. When the treatment time falls within the aforementioned range, the heat resistance of the resin film can be enhanced, and moreover, size stability in a high temperature environment can be usually effectively enhanced. In particular, when the treatment time is equal to or less than the upper limit value of the aforementioned range, clouding of the resin film due to the progress of crystallization in the step (IV) can be effectively suppressed.

The thermal shrinkage may be caused not only in the width direction but also in any direction other than the width direction. However, usually the crystallized film is thermally shrunk only in the width direction to obtain the resin film.

When the crystallized film in a sheet piece shape is subjected to a relaxation treatment in the step (IV), for example, a method in which the four edges of the crystallized film are held, and intervals between held portions are narrowed in a continuous or stepwise manner may be adopted. In this case, the intervals between held portions at the four edges of the crystallized film may be simultaneously narrowed. The intervals between held portions at a part of the edges may be narrowed, and then the intervals between held portions at another part of the edges may be narrowed. The intervals between held portions at a part of the edges may be maintained without being narrowed. Alternatively, the intervals between held portions at a part of the edges may be narrowed in a continuous or stepwise manner, and the intervals between held portions at another part of the edges may be narrowed at a time.

When a long-length crystallized film is subjected to a relaxation treatment in the step (IV), for example, a method may be used in which, with the use of a tenter stretching machine, an interval between guide rails that can guide clips is narrowed in the conveyance direction of the crystallized film or intervals between adjacent clips are narrowed.

As described above, when the thermal shrinkage of the crystallized film is effected by narrowing the intervals between held portions while keeping a state where the edges of the crystallized film are held, the degree of narrowing the intervals may be set depending on the magnitude of stress remaining in the crystallized film obtained in the step (III).

The specific degree of narrowing the intervals between held portions in the step (IV) is preferably 0.1S or more, more preferably 0.5S or more, and particularly preferably 0.7S or more, and is preferably 1.2S or less, more preferably 1.0S or less, and particularly preferably 0.95S or less, wherein the thermal shrinkage ratio measured in a state where a tensile force is not applied to the crystallized film at the relaxation temperature is defined as S(%). Further, when the thermal shrinkage ratio S is anisotropic such as when the thermal shrinkage ratios S in two orthogonal directions are different, the degree of narrowing the intervals between held portions may be set within the above-described range in each of the directions. When the degree of narrowing the intervals falls within such a range, the residual stress of the resin film can be sufficiently removed and the flatness of the resin film can be maintained.

The thermal shrinkage ratio S of the crystallized film may be measured in the following manner.

The crystallized film is cut to have a square shape with a size of 150 mm × 150 mm in an environment with a room temperature of 23°C to obtain a sample film. This sample film is heated in an oven set at the same temperature as the relaxation temperature for 60 minutes and then cooled to 23°C (room temperature). Then, the lengths of two edges parallel to a direction in which the thermal shrinkage ratio S of the sample film is to be determined are measured.

The thermal shrinkage ratio S of the sample film is calculated by the following formula (X) on the basis of the measured length of each of the two edges. In the formula (X), $L_1$ (mm) is the measured length of one of the two edges of the heated sample film, and $L_2$ (mm) is the length of the other edge.

Thermal shrinkage ratio $S(\%) = [(300 - L_1 - L_2)/300] \times 100$ (X)

[2.6. First Example of Step (III) and Step (IV)]

A first example of the above-described step (III) and step (IV) will be described below. The first example is an example of a method in which a resin film in a sheet piece shape is produced using a stretched film in a sheet piece shape. However, the step (III) and the step (IV) are not limited to this first example.

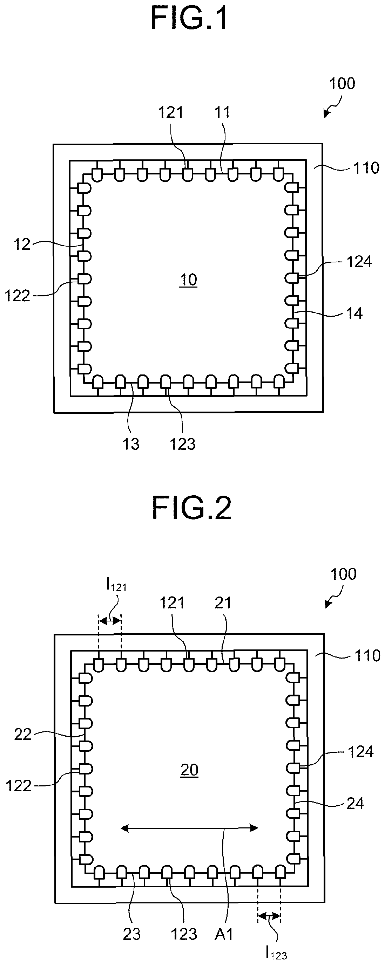

FIGs. 1 and 2 are plan views schematically illustrating an example of a holding device.

As illustrated in FIG. 1, a holding device 100 is a device for holding a stretched film 10 in a sheet piece shape. The holding device 100 includes a frame 110 and clips 121, 122, 123, and 124 provided as a plurality of holding tools on the frame 110 so as to be able to adjust their positions. The clips 121, 122, 123, and 124 are provided so as to be able to grip edges 11, 12, 13, and 14 of the stretched film 10, respectively.

When the step (III) is performed using such a holding device 100, the stretched film 10 is attached to the holding device 100. Specifically, the stretched film 10 is gripped by the clips 121 to 124, so that the four edges 11 to 14 of the stretched film 10 are held and the stretched film 10 is made in a flat state without occurrence of thermal shrinkage. Then, the stretched film 10 with the four edges 11 to 14 held in such a state is heated at a specific crystallization temperature in an oven not illustrated.

As a result, the crystallization of the crystallizable polymer contained in the stretched film 10 progresses, so that a crystallized film 20 is obtained as illustrated in FIG. 2. At this time, since the stretched film 10 is kept in a state where its four edges 11 to 14 are held, the crystallized film 20 is not deformed by thermal shrinkage. Therefore, stress that promotes generation of thermal shrinkage usually remains in the crystallized film 20.

After that, the crystallized film 20 produced in the aforementioned manner is usually subjected to the step (IV). At the time point when the step (III) is completed, the crystallized film 20 is kept in a state where the edges 21, 22, 23, and 24 of the crystallized film 20 are held by the clips 121, 122, 123, and 124 of the holding device 100. In the step (IV), intervals $I_{121}$ between the clips 121 of the holding device 100 and intervals $I_{123}$ between the clips 123 of the holding device 100 corresponding to the film width direction A1 are narrowed while keeping a state where the crystallized film 20 is heated to a specific relaxation temperature. As a result, narrowing of the intervals between portions of the crystallized film 20 held by the clips 121 to 124 are achieved in a manner such that the narrowing follows the size change of the crystallized film 20 due to thermal shrinkage. Consequently, the thermal shrinkage of the crystallized film 20 occurs in the width direction A1 while the crystallized film 20 is maintained flat, so that a resin film in a sheet piece shape is obtained.

In the resin film thus obtained, stress that may cause a size change in a high-temperature environment is eliminated. Therefore, the obtained resin film can have improved size stability in a high-temperature environment. Further, since the crystallizable polymer contained in the resin film is crystallized, the resin film has improved heat resistance.

[2.6. Second Example of Step (III) and Step (IV)]

A second example of the above-described step (III) and step (IV) will be described below. The second example is an example of a method in which a long-length resin film is produced using a long-length stretched film. However, the step (III) and the step (IV) are not limited to this second example.

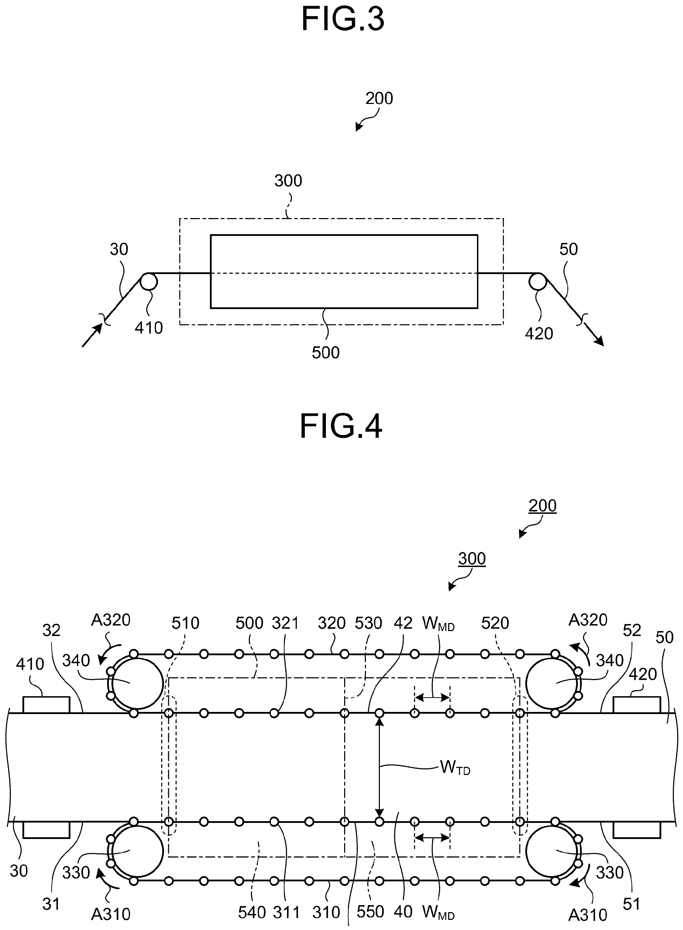

FIG. 3 is a front view schematically illustrating an example of an apparatus for producing a resin film, and FIG. 4 is a plan view schematically illustrating the example of the apparatus for producing a resin film.

As illustrated in FIGs. 3 and 4, a production apparatus 200 includes a tenter stretching machine 300 as a holding device, conveyance rolls 410 and 420, and an oven 500 as a heating device.

As illustrated in FIG. 4, the tenter stretching machine 300 includes endless link devices 310 and 320 provided on both left and right sides of a film conveyance path, and sprockets 330 and 340 for driving the link devices 310 and 320. The link devices 310 and 320 are provided with a plurality of clips 311 and a plurality of clips 321 as holding tools, respectively.

The clips 311 and 321 are provided so as to grip edges 31 and 32 at width-direction ends of a stretched film 30, edges 41 and 42 at width-direction ends of a crystallized film 40, and edges 51 and 52 at width-direction ends of a resin film 50 to hold these films. Further, these clips 311 and 321 are provided so as to be movable by the rotation of the link devices 310 and 320.

The link device 310 and 320 are provided so as to be driven by the sprockets 330 and 340 and rotatable as shown by arrows A310 and A320 along circulating tracks defined by unillustrated guide rails provided on both sides of the film conveyance path. Therefore, the clips 311 and 321 provided on the link devices 310 and 320 are configured so as to be movable along desired circulating tracks on both sides of the film conveyance path.

The clips 311 and 321 are provided so as to, by any appropriate mechanism, hold the two edges 31 and 32 of the stretched film 30 at a place near an inlet 510 of the oven 500, move in a film conveyance direction associated with the rotation of the link devices 310 and 320 while keeping the holding of the two edges 31 and 32, and release the resin film 50 at a place near an outlet 520 of the oven 500.

The tenter stretching machine 300 is configured so as to adjust intervals $W_{MD}$ between the clips 311 and intervals $W_{MD}$ between the clips 321 in the film conveyance direction, and intervals $W_{TD}$ between the clip 311 and the clip 321 in the width direction. The example shown here is an example in which the intervals $W_{MD}$ between the clips 311, the intervals $W_{MD}$ between the clips 321, and the intervals $W_{TD}$ between the clip 311 and the clip 321 are adjustable by the pantograph-type link devices 310 and 320. As the link devices 310 and 320 like this, for example, a device described in International publication No. 2016/067893 may be used.

As illustrated in FIGs. 3 and 4, the conveyance rolls 410 and 420 are provided on both sides in the film conveyance direction of the tenter stretching machine 300. The conveyance roll 410 provided upstream of the tenter stretching machine 300 is provided to convey the stretched film 30, and the conveyance roll 420 provided downstream of the tenter stretching machine 300 is provided to convey the resin film 50. These conveyance rolls 410 and 420 are provided so as to be capable of giving a specific conveyance tensile force to the stretched film 30 for conveyance. Therefore, these conveyance rolls 410 and 420 can function as holding devices that can hold the stretched film 30 on both sides in the lengthwise direction of the tenter stretching machine 300 so as not to allow the stretched film 30 to cause thermal shrinkage. The tenter stretching machine 300 corresponds to a portion of the stretched film 30 subjected to the crystallization treatment.

As illustrated in FIG. 4, the oven 500 has a partition 530. The space in the oven 500 is divided by the partition 530 into an upstream crystallization chamber 540 and a downstream relaxation chamber 550.

When the resin film 50 is produced using such a production apparatus 200, the long-length stretched film 30 is fed to the tenter stretching machine 300 through the conveyance roll 410.

As illustrated in FIG. 4, the stretched film 30 fed to the tenter stretching machine 300 is gripped by the clips 311 and 321 at the place near the inlet 510 of the oven 500, so that the two edges 31 and 32 are held by the clips 311 and 321. The stretched film 30 held by the clips 311 and 321 is kept in a state where the stretched film 30 is flat without occurrence of thermal shrinkage by holding by the clips 311 and 321 and holding by the conveyance rolls 410 and 420. Then, the stretched film 30 is conveyed into the crystallization chamber 540 in the oven 500 through the inlet 510 while being kept in the holding state as described above.

In the crystallization chamber 540, the stretched film 30 is heated at a specific crystallization temperature to perform the step (III). As a result, the crystallization of the crystallizable polymer contained in the stretched film 30 progresses, so that the crystallized film 40 is obtained. At this time, the stretched film 30 is in a state where the two edges 31 and 32 thereof are held and the stretched film is also held by the conveyance rolls 410 and 420, and therefore the crystallized film 40 is not deformed by thermal shrinkage. Therefore, stress that promotes generation of thermal shrinkage usually remains in the crystallized film 40.

Then, the crystalized film 40 thus produced is fed into the relaxation chamber 550 in the oven 500 while being kept in a state where the two edges 41 and 42 are held by the clips 311 and 321. Then, the step (IV) is performed in this relaxation chamber 550. Specifically, in the relaxation chamber 550, the intervals $W_{TD}$ between the clips 311 and 321 in the width direction are narrowed while keeping a state where the crystalized film 40 is heated to a specific relaxation temperature. As a result, narrowing of the intervals between portions of the crystallized film 40 held by the clips 311 and 321 are achieved in a manner such that the narrowing follows the size change of the crystallized film 40 due to thermal shrinkage. Therefore, the crystalized film 40 causes thermal shrinkage in the width direction while the crystalized film 40 is maintained flat, so that the long-length resin film 50 is obtained.

The resin film 50 is fed out of the oven 500 through the outlet 520. Then, the resin film 50 is released from the clips 311 and 321 at the place near the outlet 520 of the oven 500, fed through the conveyance roll 420, and collected.

In the resin film 50 thus obtained, stress that may cause a size change in a high-temperature environment is eliminated. Therefore, the obtained resin film 50 can have improved size stability in a high-temperature environment. Further, since the crystallizable polymer contained in the resin film 50 is crystallized, the resin film has improved heat resistance.

[2.7. Optional Step]

The method for producing the resin film described above may further include an optional step performed in combination with the above-described step (I) to step (V).

The method for producing the resin film may include, for example, a step of subjecting the resin film to a surface treatment as an optional step.

[3. Electroconductive Film]

The resin film described above is usually excellent in heat resistance, and further excellent in size stability in a high-temperature environment. Thus, when a film forming step including a high-temperature process such as a step of forming an inorganic layer is performed, good film formation can be performed.

Therefore, by taking advantage of such superior properties, the resin film may be used as a substrate film of an electroconductive film. This electroconductive film is a film having a multilayer structure including the resin film and an electroconductive layer directly or indirectly disposed on the resin film. Since the resin film is usually excellent in adhesion to an electroconductive layer, the electroconductive layer may be provided directly on the surface of the resin film, but it may be provided via an underlayer such as a planarization layer if necessary.

As the material of the electroconductive layer, for example, electroconductive inorganic materials may be used. Among these, it is preferable to use a material that can realize a transparent electroconductive layer. Examples of the inorganic material may include ITO (indium tin oxide), IZO (indium zinc oxide), ZnO (zinc oxide), IWO (indium tungsten oxide), ITiO (indium titanium oxide), AZO (aluminum zinc oxide), GZO (gallium zinc oxide), XZO (zinc-based special oxide), and IGZO (indium gallium zinc oxide).

The thickness of the electroconductive layer is preferably 30 nm or more, and more preferably 50 nm or more, and is preferably 250 nm or less, and more preferably 220 nm or less.

When the electroconductive layer is formed, a function as an electrode can be imparted to the obtained electroconductive film. The surface resistivity of the surface of the electroconductive film on the side of the electroconductive layer may be appropriately selected depending on the intended use, and is usually 1000 $\Omega$/sq. or less, and preferably 100 $\Omega$/sq. or less.

The electroconductive film may be produced by a production method including a step of forming an electroconductive layer on the resin film. The method of forming the electroconductive layer is not particularly limited, and the electroconductive layer may be formed by a film formation method such as a sputtering method, and a vapor deposition method. As described above, since the resin film is usually excellent in heat resistance and further excellent in size stability in a high-temperature environment, it is possible to form a film with high output, and therefore an electroconductive layer which is flat and excellent in electroconductivity can be rapidly formed.

In addition, the above-described electroconductive film may include an optional layer such as an optical functional layer or a barrier layer in combination with the resin film and the electroconductive layer.

[Examples]

Hereinafter, the present invention will be specifically described by illustrating Examples. However, the present invention is not limited to the Examples described below.

In the following description, "%" and "part" representing quantity are on the basis of weight, unless otherwise specified. The operations described below were performed under the conditions of normal temperature and normal pressure, unless otherwise specified. In the following description, "sccm" is a unit of flow rate of a gas, by which the amount of the gas flowing per minute is represented as the volume (cm$^3$) of the gas at 25°C and 1 atm.

[Evaluation Methods]

[1. Method for Measuring Thickness of Film]

The thickness of a film was measured using a snap gauge ("ID-C112BS" manufactured by Mitutoyo Corporation) at a plurality of points in the central part with a diameter of 50 mm of the film. The average value of measured values was calculated to determine the average thickness of the film.

[2. Method for Measuring Haze of Film]

A square piece of 50 mm × 50 mm was cut out from a film around the central part of the film to obtain a sample. Then, the haze of the sample was measured using a haze meter ("NDH5000" manufactured by Nippon Denshoku Industries Co., Ltd.).

[3. Method for Measuring Retardations Re and Rth of Film]

The in-plane retardation and the thickness-direction retardation of a film were measured using a phase difference meter ("Mueller Matrix Polarimeter (Axo Scan)" manufactured by Opto Science, Inc.) at a plurality of points in the central part with a diameter of 50 mm of the film. The average value of in-plane retardation values measured at the points was calculated, and the average value was adopted as the in-plane retardation Re of the film. Further, the average value of thickness-direction retardation values measured at the points was calculated, and the average value was adopted as the thickness-direction retardation Rth of the film. The retardations were measured at a wavelength of 590 nm.

[4. Method for Measuring Retardation Fluctuation of Film]

The in-plane retardation and the thickness-direction retardation of the resin film were measured at two points about 50 cm away from the central part of the resin film in the TD direction. The fluctuation ΔRe of the in-plane retardation Re and the fluctuation ΔRth of the thickness-direction retardation Rth of the resin film were determined by the following formulas (A1) and (A2) using measured in-plane retardation maximum value Re(max), thickness-direction retardation maximum value Rth(max), in-plane retardation minimum value Re(min), and thickness-direction retardation minimum value Rth(min).

$$\Delta Re = Re(max) - Re(min) \quad (A1)$$

$$\Delta Rth = Rth(max) - Rth(min) \quad (A2)$$

[5. Method for Evaluating Curl Amount of Electroconductive Film]

On a flat stage, an electroconductive film was placed with its electroconductive layer side down. The height from the surface of the stage to each of the four corners of the electroconductive film suspended above the stage was measured using a ruler. The average of measured height values was adopted as a curl amount.

[6. Method for Evaluating Heat Resistance Temperature of Film]

A film as a sample was allowed to stand in an atmosphere of 150°C for 10 minutes without applying a tensile force to the film. After that, the surface state of the film was visually observed.
When the surface irregularities of the film were confirmed, the heat resistance temperature of the film was determined as lower than 150°C and therefore evaluated as "poor". When the surface irregularities of the film were not confirmed, the heat resistance temperature of the film was determined as 150°C or higher and therefore evaluated as "good".

[7. Method for Measuring Weight-Average Molecular Weight and Number-Average Molecular Weight]

The weight-average molecular weight and the number-average molecular weight of the polymer were measured as a polystyrene-equivalent value by a gel permeation chromatography (GPC) system ("HLC-8320" manufactured by Tosoh Corporation). In the measurement, an H-type column (manufactured by Tosoh Corporation) was used as a column, and tetrahydrofuran was used as a solvent. The measurement was performed at a temperature of 40°C.

[Method for Measuring Glass Transition Temperature Tg and Melting Point Mp]

The glass transition temperature Tg and the melting point Mp of a sample were determined by heating a sample to 300°C in a nitrogen atmosphere, rapidly cooling the heated sample with liquid nitrogen, and elevating the temperature of the sample using a differential scanning calorimeter (DSC) at a temperature rise rate of 10°C/min.

[9. Method for Measuring Hydrogenation Ratio of Polymer]

The hydrogenation ratio of the polymer was measured by $^1$H-NMR at 145°C using orthodichlorobenzene-d[4] as a solvent.

[10. Method for Measuring Racemo Diad Ratio of Polymer]

The $^{13}$C-NMR measurement of a polymer was performed by an inverse-gated decoupling method at 200°C with ortho-dichlorobenzene-d4 as a solvent. From the result of this $^{13}$C-NMR measurement, a signal at 43.35 ppm derived from the meso diad and a signal at 43.43 ppm derived from the racemo diad were identified with the peak at 127.5 ppm of ortho-dichlorobenzene-d4 as a reference shift. On the basis of the intensity ratio of these signals, the ratio of the racemo diad of the polymer was determined.

[Production Example 1. Production of Hydrogenated Product of Ring-Opening Polymer of Dicyclopentadiene]

A metal pressure-resistant reaction vessel was sufficiently dried and inside air thereof was replaced with nitrogen. In the metal pressure-resistant reaction vessel, 154.5 parts of cyclohexane, 42.8 parts of a cyclohexane solution of dicyclopentadiene (endo isomer content: 99% or higher) with a concentration of 70% (amount as dicyclopentadiene: 30 parts), and 1.9 parts of 1-hexene were placed and heated to 53°C.
Then, 0.061 part of an n-hexane solution of diethylaluminum ethoxide with a concentration of 19% was added to a solution that had been obtained by dissolving 0.014 part of a tetrachlorotungsten phenylimide (tetrahydrofuran) complex in 0.70 part of toluene, and the mixture was stirred for 10 minutes to prepare a catalyst solution.
The catalyst solution was added to the pressure-resistant reaction vessel to initiate a ring-opening polymerization reaction. After that, the reaction was performed for 4 hours while the temperature was maintained at 53°C to obtain a solution of a ring-opening polymer of dicyclopentadiene.
The obtained ring-opening polymer of dicyclopentadiene had a number-average molecular weight (Mn) of 8,750 and a weight-average molecular weight (Mw) of 28,100, and a molecular weight distribution (Mw/Mn) determined from them was 3.21.
Then, 0.037 part of 1,2-ethanediol was added to 200 parts of the obtained solution of the ring-opening polymer of dicyclopentadiene, and the mixture was heated to 60°C and stirred for 1 hour to terminate the polymerization reaction. Then, 1 part of a hydrotalcite-like compound ("KYOWAAD (registered trademark) 2000" manufactured by Kyowa Chemical Industry Co., Ltd.) was added to the mixture, and the mixture was heated to 60°C and stirred for 1 hour. Then, 0.4 part of a filtration aid ("Radiolite (registered trademark) #1500" manufactured by Showa Chemical Industry Co., Ltd.) was added, and the mixture was filtered through a PP pleated cartridge filter ("TCP-HX" manufactured by Advantec Toyo Kaisha, Ltd.) to separate the hydrotalcite-like compound as the adsorbent and the solution.
Then, 100 parts of cyclohexane was added to 200 parts of the filtered solution of the ring-opening polymer of dicyclopentadiene (amount of polymer: 30 parts), and 0.0043 part of chlorohydridecarbonyl tris(triphenylphosphine) ruthenium was added to perform a hydrogenation reaction at a hydrogen pressure of 6 MPa and 180°C for 4 hours. As a result, a reaction solution containing a hydrogenated product of the ring-opening polymer of dicyclopentadiene was obtained. This reaction solution was a slurry solution in which the hydrogenated product was precipitated.
The hydrogenated product contained in the reaction solution was separated from the solution by a centrifugal separator and dried under reduced pressure at 60°C for 24 hours to obtain 28.5 parts of the hydrogenated product of the ring-opening polymer of dicyclopentadiene having crystallizability. The hydrogenation ratio of the hydrogenated product was found to be 99% or higher, the glass transition temperature Tg was 93°C, the melting point Mp was 262°C, and the racemo diad ratio was 89%.

[Production Example 2. Production of Pre-stretch Film A (Step (I))]

100 parts of the hydrogenated product of the ring-opening polymer of dicyclopentadiene obtained in Production Example 1 was mixed with 1.1 parts of an antioxidant (tetrakis[methylene-3-(3',5'-di-t-butyl-4'-hydroxyphenyl)propionate] methane; "Irganox (registered trademark) 1010" manufactured by BASF Japan Ltd.) to obtain a resin as the material of the film.
The aforementioned resin was charged into a twin-screw extruder ("TEM-37B" manufactured by Toshiba Machine Co., Ltd.) having four die holes each having an inner diameter of 3 mmΦ. The resin was molded by hot-melt extrusion molding using the twin-screw extruder to obtain a molded body in a strand shape. The molded body was finely cut with a strand cutter to obtain resin pellets. The twin-screw extruder was operated under the following conditions.

- Barrel preset temperature: 270°C to 280°C
- Die preset temperature: 250°C
- Screw rotation speed: 145 rpm
- Feeder rotation speed: 50 rpm

Subsequently, the obtained pellets were fed into a hot-melt extrusion film molding machine equipped with a T die. Using this film molding machine, a long-length pre-stretch film A (thickness of 50 μm, width of 120 mm) formed of the aforementioned resin was produced by a method of winding up into a roll at a rate of 2 m/min. The film molding machine was operated under the following conditions.

- Barrel preset temperature: 280°C to 290°C
- Die temperature: 270°C
- Screw rotation speed: 30 rpm

The haze of the obtained pre-stretch film A was measured and found to be 0.3%.

[Production Example 3. Production of Pre-stretch Film B (Step I)]

The pellets obtained in Production Example 2 were fed to the film molding machine, and a pre-stretch film B having a thickness of 18 μm and a width of 120 mm was produced using this film molding machine. The haze of the obtained pre-stretch film B was measured and found to be 0.3%.

[Example 1]

[1-1. Pre-heating Step (Step (V))]

The long-length pre-stretch film A produced in Production Example 2 was cut out at a randomly selected region to have a square piece of 90 mm × 90 mm. The cutting was performed such that the edges of the cut-out square pre-stretch film A were parallel to the lengthwise or width direction of the long-length pre-stretch film A.
A compact stretching machine ("EX10-B type" manufactured by Toyo Seiki Seisaku-sho, Ltd.) was prepared. The compact stretching machine is equipped with a plurality of clips that can grip the four edges of the film, and is configured to be capable of stretching the film by moving the clips. The four edges of the cut-out pre-stretch film A were gripped by the clips of the compact stretching machine.
After that, the pre-stretch film A was subjected to a step (pre-heating step) in which the pre-stretch film A was maintained at a pre-heating temperature of 140°C that was the same as a stretching temperature for 15 seconds.

[1-2. Stretching Step (Step (II))]

Then, using the compact stretching machine, the pre-stretch film A was stretched in the TD direction corresponding to the width direction of the long-length pre-stretch film A under stretching conditions of a stretching ratio of 1.05 times and a stretching temperature of 140°C to obtain a stretched film.

[1-3. Crystallization Step (Step (III))]

The four edges of the obtained stretched film were gripped by the clips of the compact stretching machine, and the stretched film was maintained at a crystallization temperature of 170°C for only 5 seconds while keeping the state where the stretched film was maintained flat so that its size was not changed. In this manner, a crystallized film was obtained.

[1-4. Relaxation Step (Step (IV))]

While keeping the state where the four edges of the crystallized film were gripped by the clips of the compact stretching machine and the crystallized film was maintained flat, the crystallized film was allowed to thermally shrink in the TD direction at a relaxation temperature of 170°C. Specifically, the crystallized film was allowed to shrink to 0.97 times in the TD direction over 5 seconds by moving the clips of the compact stretching machine. At this time, the film size in the MD direction of the crystallized film was fixed, and thereby the crystallized film was not allowed to thermally shrink in the MD direction. Herein, the MD direction is a direction corresponding to the lengthwise direction of the long-length pre-stretch film A before cutting. In this manner, a resin film was obtained.
The obtained resin film was evaluated by the above-described methods.

[1-5. Step of Forming Electroconductive Layer]

A film-forming apparatus capable of forming an electroconductive layer on one surface of the resin film by sputtering was prepared. This film-forming apparatus is a film take-up-type magnetron sputtering apparatus capable of forming a desired electroconductive layer on a surface of the resin film fixed on a long-length carrier film continuously conveyed in the apparatus. As the carrier film, a polyethylene terephthalate film was used.

The resin film was fixed to the carrier film with a polyimide tape. Then, the carrier film was fed to the film-forming apparatus to form an electroconductive layer on one surface of the resin film. In this operation, an $In_2O_3$-$SnO_2$ ceramic target was used as a target for sputtering. The film formation was performed under conditions of an argon (Ar) flow rate of 150 sccm, an oxygen ($O_2$) flow rate of 10 sccm, an output of 4.0 kW, a degree of vacuum of 0.3 Pa, and a film conveyance rate of 0.5 m/min.

As a result, a 100 nm-thick transparent electroconductive layer formed of ITO was formed on one surface of the resin film, so that an electroconductive film having the electroconductive layer and the resin film was obtained.

The electroconductive film thus obtained was evaluated by the above-described method.

[Example 2] (not according to the invention)

In the pre-heating step, the pre-heating temperature was changed to 130°C that was the same as the stretching temperature. Furthermore, the stretching temperature in the stretching step was changed to 130°C. In the relaxation step, the relaxation ratio in the TD direction was changed to 0.99 times. A resin film and an electroconductive film were produced and evaluated by the same operations as those in Example 1 except for the above-described matters.

[Example 3]

The stretching ratio in the stretching step was changed to 1.15 times. A resin film and an electroconductive film were produced and evaluated by the same operations as those in Example 1 except for the above-described matters.

[Example 4]

The pre-stretch film B produced in Production Example 3 was used instead of the pre-stretch film A. In the pre-heating step, the pre-heating temperature was changed to 125°C that was the same as the stretching temperature, and the time for maintaining the pre-stretch film B at the pre-heating temperature that was the same as the stretching temperature was changed to 10 seconds. Furthermore, in the stretching step, the stretching temperature was changed to 125°C, and the stretching ratio was changed to 1.20 times. In the crystallization step, the crystallization temperature was changed to 150°C, and the time for maintaining the temperature of the stretched film at the crystallization temperature was changed to 10 seconds. In the relaxation step, the relaxation ratio in the TD direction was changed to 0.99 times. A resin film and an electroconductive film were produced and evaluated by the same operations as those in Example 1 except for the above-described matters.

[Comparative Example 1]

The pre-stretch film A produced in Production Example 2 was evaluated by the above-described methods.

Furthermore, an electroconductive film was produced and evaluated by the same operations as those in Step [1-5] of Example 1 using the pre-stretch film A instead of the resin film.

[Comparative Example 2]

In the pre-heating step, the pre-heating temperature was changed to 130°C that was the same as the stretching temperature. Furthermore, in the stretching step, the stretching temperature was changed to 130°C, and the stretching ratio was changed to 1.15 times. In the crystallization step, the time for maintaining the temperature of the stretched film at the crystallization temperature was changed to 35 seconds. A resin film and an electroconductive film were produced and evaluated by the same operations as those in Example 1 except for the above-described matters.

[Comparative Example 3]

In the pre-heating step, the pre-heating temperature was changed to 130°C that was the same as the stretching temperature. In the stretching step, the stretching direction in which the pre-stretch film A was to be stretched was changed to the MD direction. Furthermore, in the stretching step, the stretching temperature was changed to 130°C, and the stretching ratio was changed to 1.15 times. In the crystallization step, the crystallization temperature was changed to 200°C. A resin film and an electroconductive film were produced and evaluated by the same operations as those in Example 1 except for the above-described matters.

[Comparative Example 4]

In the pre-heating step, the pre-heating temperature was changed to 130°C that was the same as the stretching temperature, and the time for maintaining the pre-stretch film A at the pre-heating temperature that was the same as the stretching temperature was changed to 150 seconds. Furthermore, in the stretching step, the stretching temperature was changed to 130°C, and the stretching ratio was changed to 1.3 times. In the crystallization step, the crystallization temperature was changed to 200°C. A resin film and an electroconductive film were produced and evaluated by the same operations as those in Example 1 except for the above-described matters.

[Results]

The results of Examples and Comparative Examples are shown in the following table. In the following table, the meanings of abbreviations are as follows.
MD: a direction corresponding to the lengthwise direction of a long-length pre-stretch film.
TD: a direction corresponding to the width direction of a long-length pre-stretch film.
Relaxation ratio: a ratio of the size of the resin film obtained after the relaxation step relative to the size of the crystallized film before undergoing the relaxation step.
Re fluctuation: fluctuation in in-plane retardation of the resin film.
Rth fluctuation: fluctuation in thickness-direction retardation of the resin film.

[Table 1. Results of Examples and Comparative Examples]

|  | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|
| Pre-heating step |  |  |  |  |  |  |  |  |
| Pre-heating temperature (°C) | 140 | 130 | 140 | 125 | - | 130 | 130 | 130 |
| Pre-heating time (second) | 15 | 15 | 15 | 10 | - | 15 | 15 | 150 |
| Stretching step |  |  |  |  |  |  |  |  |
| Stretching direction | TD | TD | TD | TD | - | TD | MD | TD |
| Stretching temperature (°C) | 140 | 130 | 140 | 125 | - | 130 | 130 | 130 |
| Stretching ratio (times) | 1.05 | 1.05 | 1.15 | 1.2 | - | 1.15 | 1.15 | 1.3 |
| Crystallization step |  |  |  |  |  |  |  |  |
| Crystallization temperature (°C) | 170 | 170 | 170 | 150 | - | 170 | 200 | 200 |
| Crystallization time (second) | 5 | 5 | 5 | 10 | - | 35 | 5 | 5 |
| Relaxation step |  |  |  |  |  |  |  |  |
| Relaxation ratio in TD direction (times) | 0.97 | 0.99 | 0.97 | 0.99 | - | 0.97 | 0.97 | 0.97 |
| Relaxation ratio in MD direction (times) | 1.00 | 1.00 | 1.00 | 1.00 | - | 1.00 | 1.00 | 1.00 |
| Relaxation time (second) | 5 | 5 | 5 | 5 | - | 5 | 5 | 5 |
| Resin film |  |  |  |  |  |  |  |  |

(continued)

| Relaxation ste P | | | | | | | | |
|---|---|---|---|---|---|---|---|---|
| Thickness (μm) | 50 | 50 | 48 | 15 | 50 | 48 | 48 | 44 |
| Haze (%) | 1.8 | 2.6 | 1.8 | 0.4 | 0.1 | 2.7 | 4.0 | 1.8 |
| Re (nm) | 0.1 | 2.3 | 4.5 | 0.5 | 4.5 | 7 | 28 | 19 |
| Rth (nm) | 19 | 18 | 24 | 20 | 5 | 22 | 35 | 27 |
| Re fluctuation (nm) | 0.1 | 0.8 | 0.3 | 0.3 | 3.3 | 4.8 | 8.5 | 6.5 |
| Rth fluctuatio n (nm) | 2 | 5 | 7 | 7 | 3 | 9 | 12 | 13 |
| Heat resistanc e temperature | Good | Good | Good | Good | Poor | Good | Good | Good |
| Electroconduct ive film | | | | | | | | |
| Curling amount (mm) | 5 | 8 | 12 | 9 | 2 | 19 | 22 | 29 |

Example 2 is not according to the invention.

Reference Sign List

10 stretched film
11, 12, 13 and 14 edge of stretched film
20 crystallized film
21, 22, 23 and 24 edge of crystallized film
30 stretched film
31 and 32 edge of stretched film
40 crystallized film
41 and 42 edge of crystallized film
50 resin film
51 and 52 edge of resin film
100 holding device
110 frame
121, 122, 123 and 124 clip
200 apparatus for producing a resin film
300 tenter stretching machine
310 and 320 link devices
311 and 321 clip
330 and 340 sprocket
410 and 420 conveyance roll
500 oven
510 oven inlet
520 oven outlet
530 oven partition
540 crystallization chamber
550 relaxation chamber

**Claims**

1. A resin film comprising a crystallizable polymer,

the crystallizable polymer having a melting point Mp that can be observed by a differential scanning calorimeter at a temperature rise rate of 10 °C/min,

the crystallizable polymer being an alicyclic structure-containing polymer,

an in-plane retardation Re of the resin film measured at a wavelength of 590 nm being less than 5 nm,

a thickness-direction retardation Rth of the resin film measured at a wavelength of 590 nm being less than 25 nm,

a haze HZ of the resin film being less than 3.0%,

wherein the haze HZ is measured using a haze meter for a sample of the resin film obtained by cutting the resin film around the central part of the resin film into a square piece of 50 mm x 50 mm,

**characterized in that**

the melting point Mp of the crystallizable polymer is 200 °C or higher, and

an in-plane retardation fluctuation ΔRe of the resin film determined by the following formula (A1) is 0.5 nm or less:

$$\Delta Re = Re(max) - Re(min) \quad (A1)$$

wherein

Re(max) and Re(min) are maximum and minimum of in-plane retardation values measured at a plurality of points about 50 cm away from the central part of the resin film toward both the edges in the width direction of the resin film, or at a plurality of points each of which is about 50 cm away from the central part of the resin film in one arbitrary direction when the resin film is a film whose width direction cannot be defined.

2. The resin film according to claim 1, wherein
   the alicyclic structure-containing polymer is a hydrogenated product of a ring-opening polymer of dicyclopentadiene.

3. The resin film according to any one of claim 1 or 2, wherein
   the resin film is an optical film.

4. An electroconductive film comprising:

   the resin film according to any one of claims 1 to 3; and
   an electroconductive layer disposed on the resin film.

5. A method for producing a resin film comprising a crystallizable polymer, wherein

   the crystallizable polymer has a melting point Mp that can be observed by a differential scanning calorimeter at a temperature rise rate of 10 °C/min,
   the crystallizable polymer is an alicyclic structure-containing polymer,
   an in-plane retardation Re of the resin film measured at a wavelength of 590 nm is less than 5 nm,
   a thickness-direction retardation Rth of the resin film measured at a wavelength of 590 nm is less than 25 nm,
   a haze HZ of the resin film is less than 3.0%, wherein the haze HZ is measured using a haze meter for a sample of the resin film obtained by cutting the resin film around the central part of the resin film into a square piece of 50 mm x 50 mm,
   the melting point Mp of the crystallizable polymer is 200 °C or higher, and
   an in-plane retardation fluctuation ΔRe of the resin film determined by the following formula (A1) is 0.5 nm or less:

$$\Delta Re = Re(max) - Re(min) \quad (A1)$$

   wherein
   Re(max) and Re(min) are maximum and minimum of in-plane retardation values measured at a plurality of points about 50 cm away from the central part of the resin film toward both the edges in the width direction of the resin film, or at a plurality of points each of which is about 50 cm away from the central part of the resin film in one arbitrary direction when the resin film is a film whose width direction cannot be defined,
   the method for producing the resin film comprising:

   a step (I) of preparing a long-length pre-stretch film containing the crystallizable polymer;
   a step (V) of pre-heating the pre-stretch film for a pre-heating time of 1 second or more and 60 seconds or less;
   a step (II) of stretching the pre-stretch film at a stretching temperature of Tg - 50°C to Tg + 50°C and stretching ratio of 1.01 times or more and 1.20 times or less in a width direction to obtain a stretched film; and a step (III) of adjusting a temperature of the stretched film to a crystallization temperature of Mp - 120°C to Mp for a crystallization time of 25 seconds or less while keeping a state where two or more edges of the stretched film are held, to obtain the resin film, wherein
Tg represents the glass transition temperature of the crystallizable polymer that is observed by a differential scanning calorimeter at a temperature rise rate of 10°C/min.

6. The method for producing the resin film according to claim 5, comprising, after the step (III), a step (IV) of effecting thermal shrinkage of the resin film at a relaxation temperature of Tg or higher and Mp or lower.

7. A method for producing an electroconductive film, comprising a step of forming an electroconductive layer on the resin film according to any one of claims 1 to 3.

**Patentansprüche**

1. Harzfolie umfassend ein kristallisierbares Polymer, worin

das kristallisierbare Polymer einen Schmelzpunkt Mp, der mit einem Differential-Scanning-Kalorimeter bei einer Temperaturanstiegsgeschwindigkeit von 10 °C/min gemessen werden kann,
wobei das kristallisierbare Polymer ein alicyclische Strukturen enthaltendes Polymer ist,
eine Verzögerung Re der Harzfolie in der Ebene, gemessen bei einer Wellenlänge von 590 nm, von weniger als 5 nm,
eine Verzögerung Rth der Harzfolie in Richtung der Dicke, gemessen bei einer Wellenlänge von 590 nm, von weniger als 25 nm,
eine Trübung HZ der Harzfolie von weniger als 3,0 % aufweist,
wobei die Trübung HZ einer Probe der Harzfolie, die durch Schneiden der Harzfolie in ein quadratisches Stück von 50 mm x 50 mm um den zentralen Teil der Harzfolie erhalten wird, unter Verwendung eines Trübungsmessgeräts gemessen wird,
**dadurch gekennzeichnet, dass**
der Schmelzpunkt Mp des kristallisierbaren Polymers 200 °C oder mehr beträgt und
eine in der Ebene liegende Verzögerungsschwankung ΔRe der Harzfolie, bestimmt durch die folgende Formel (A1), 0,5 nm oder weniger beträgt:

$$\Delta Re = Re(max) - Re(min) \quad (A1)$$

wobei
Re(max) und Re(min) Maximal- und Minimalwerte der Verzögerung in der Ebene sind, die gemessen werden an einer Vielzahl von Punkten, die etwa 50 cm vom mittleren Teil der Harzfolie in Richtung der beiden Ränder in der Breitenrichtung der Harzfolie entfernt sind, oder an einer Vielzahl von Punkten, von denen jeder etwa 50 cm vom mittleren Teil der Harzfolie in einer beliebigen Richtung entfernt ist, wenn die Harzfolie eine Folie ist, deren Breitenrichtung nicht definiert werden kann.

2. Harzfolie gemäß Anspruch 1, wobei das alicyclische Strukturen enthaltende Polymer ein hydriertes Produkt eines Ringöffnungspolymers von Dicyclopentadien ist.

3. Harzfolie gemäß einem der Ansprüche 1 oder 2, wobei die Harzfolie eine optische Folie ist.

4. Elektrisch leitende Folie, umfassend:

die Harzfolie gemäß einem der Ansprüche 1 bis 3; und
eine elektrisch leitende Schicht, die auf der Harzfolie angeordnet ist.

5. Verfahren zur Herstellung einer Harzfolie umfassend ein kristallisierbares Polymer, worin

das kristallisierbare Polymer einen Schmelzpunkt Mp aufweist, der mit einem Differential-Scanning-Kalorimeter bei einer Temperaturanstiegsgeschwindigkeit von 10 °C/min gemessen werden kann,

das kristallisierbare Polymer ein alicyclische Strukturen enthaltendes Polymer ist,

eine Verzögerung Re der Harzfolie in der Ebene, gemessen bei einer Wellenlänge von 590 nm, von weniger als 5 nm aufweist,

die Verzögerung Rth der Harzfolie in Richtung der Dicke, gemessen bei einer Wellenlänge von 590 nm, von weniger als 25 nm aufweist,

eine Trübung HZ der Harzfolie von weniger als 3,0 % aufweist, wobei die Trübung HZ einer Probe der Harzfolie, die durch Schneiden der Harzfolie in ein quadratisches Stück von 50 mm x 50 mm um den zentralen Teil der Harzfolie erhalten wird, unter Verwendung eines Trübungsmessers gemessen wird,

der Schmelzpunkt Mp des kristallisierbaren Polymers 200 °C oder mehr beträgt und

eine in der Ebene liegende Verzögerungsschwankung ΔRe der Harzfolie, bestimmt durch die folgende Formel (A1), von 0,5 nm oder weniger aufweist:

$$\Delta Re = Re(max) - Re(min) \quad (A1)$$

wobei

Re(max) und Re(min) Maximal- und Minimalwerte der Verzögerung in der Ebene sind, die gemessen werden an einer Vielzahl von Punkten, die etwa 50 cm vom zentralen Teil der Harzfolie in Richtung der beiden Ränder in der Breitenrichtung der Harzfolie entfernt sind, oder an einer Vielzahl von Punkten, die jeweils etwa 50 cm vom zentralen Teil der Harzfolie in einer beliebigen Richtung entfernt sind, wenn die Harzfolie eine Folie ist, deren Breitenrichtung nicht definiert werden kann,

wobei das Verfahren zur Herstellung der Harzfolie umfasst:

einen Schritt (I) der Herstellung einer langen vorgereckten Folie, die das kristallisierbare Polymer enthält;

einen Schritt (V) des Vorwärmens der Vorreckfolie für eine Vorwärmzeit von 1 Sekunde oder mehr und 60 Sekunden oder weniger;

einen Schritt (II) des Reckens der vorgereckten Folie bei einer Recktemperatur von Tg - 50° C bis Tg + 50° C und einem Reckverhältnis von 1,01-fach oder mehr und 1,20-fach oder weniger in Breitenrichtung, um eine gereckte Folie zu erhalten; und

einen Schritt (III) des Anpassens der Temperatur der gereckten Folie auf eine Kristallisationstemperatur von Mp - 120 °C bis Mp für eine Kristallisationszeit von 25 Sekunden oder weniger, während ein Zustand beibehalten wird, in dem zwei oder mehr Kanten der gereckten Folie gehalten werden, um die Harzfolie zu erhalten, wobei

Tg die Glasübergangstemperatur des kristallisierbaren Polymers ist, die mit einem Differential-Scanning-Kalorimeter bei einer Temperaturanstiegsrate von 10° C/min gemessen wird.

6. Verfahren zur Herstellung der Harzfolie gemäß Anspruch 5, das nach dem Schritt (III) einen Schritt (IV) des Bewirkens einer thermischen Schrumpfung der Harzfolie bei einer Relaxationstemperatur von Tg oder höher und Mp oder niedriger umfasst.

7. Verfahren zur Herstellung einer elektrisch leitenden Folie, umfassend einen Schritt der Bildung einer elektrisch leitenden Schicht auf der Harzfolie gemäß einem der Ansprüche 1 bis 3.

## Revendications

1. Film de résine comprenant un polymère cristallisable,

le polymère cristallisable ayant un point de fusion Mp qui peut être observé par un calorimètre différentiel à balayage à une vitesse d'augmentation de température de 10 °C/min,

le polymère cristallisable étant un polymère contenant une structure alicyclique,

un retard dans le plan Re du film de résine mesuré à une longueur d'onde de 590 nm étant inférieur à 5 nm,

un retard dans la direction de l'épaisseur Rth du film de résine mesuré à une longueur d'onde de 590 nm étant inférieur à 25 nm,

un trouble HZ du film de résine étant inférieur à 3,0 %,

dans lequel le trouble HZ est mesuré en utilisant un visibilimètre pour un échantillon du film de résine obtenu en découpant le film de résine autour de la partie centrale du film de résine dans un morceau carré de 50 mm x 50 mm,

**caractérisé en ce que**

le point de fusion Mp du polymère cristallisable est supérieur ou égal à 200 °C, et

une fluctuation de retard dans le plan ∆Re du film de résine déterminée par la formule (A1) suivante est inférieure ou égale à 0,5 nm :

$$\Delta Re = Re(max) - Re(min) \quad (A1)$$

dans lequel

Re(max) et Re(min) sont le maximum et le minimum de valeurs de retard dans le plan mesurées au niveau d'une pluralité de points éloignés d'environ 50 cm de la partie centrale du film de résine vers les deux bords dans la direction de la largeur du film de résine, ou au niveau d'une pluralité de points dont chacun est éloigné d'environ 50 cm de la partie centrale du film de résine dans une direction arbitraire lorsque le film de résine est un film dont la direction de la largeur ne peut pas être définie.

2.  Film de résine selon la revendication 1, dans lequel
    le polymère contenant la structure alicyclique est un produit hydrogéné d'un polymère formé par ouverture de cycle de dicyclopentadiène.

3.  Film de résine selon une quelconque de la revendication 1 ou 2, dans lequel le film de résine est un film optique.

4.  Film électroconducteur comprenant :

    le film de résine selon l'une quelconque des revendications 1 à 3 ; et
    une couche électroconductrice disposée sur le film de résine.

5.  Procédé de production d'un film de résine comprenant un polymère cristallisable, dans lequel

    le polymère cristallisable a un point de fusion Mp qui peut être observé par un calorimètre différentiel à balayage à une vitesse d'augmentation de température de 10 °C/min,
    le polymère cristallisable est un polymère contenant une structure alicyclique,
    un retard dans le plan Re du film de résine mesuré à une longueur d'onde de 590 nm est inférieur à 5 nm,
    un retard dans la direction de l'épaisseur Rth du film de résine mesuré à une longueur d'onde de 590 nm est inférieur à 25 nm,
    un trouble HZ du film de résine est inférieur à 3,0 %, dans lequel le trouble HZ est mesuré en utilisant un visibilimètre pour un échantillon du film de résine obtenu en découpant le film de résine autour de la partie centrale du film de résine dans un morceau carré de 50 mm x 50 mm,
    le point de fusion Mp du polymère cristallisable est supérieur ou égal à 200 °C, et
    une fluctuation de retard dans le plan ∆Re du film de résine déterminée par la formule (A1) suivante est inférieure ou égale à 0,5 nm :

$$\Delta Re = Re(max) - Re(min) \quad (A1)$$

    dans lequel
    Re(max) et Re(min) sont le maximum et le minimum de valeurs de retard dans le plan mesurées au niveau d'une pluralité de points éloignés d'environ 50 cm de la partie centrale du film de résine vers les deux bords dans la direction de la largeur du film de résine, ou au niveau d'une pluralité de points dont chacun est éloigné d'environ 50 cm de la partie centrale du film de résine dans une direction arbitraire lorsque le film de résine est un film dont la direction de la largeur ne peut pas être définie,
    le procédé de production du film de résine comprenant :

    une étape (I) de préparation d'un film préétiré en longueur contenant le polymère cristallisable ;
    une étape (V) de préchauffage du film préétiré pendant un temps de préchauffage supérieur ou égal à 1 seconde et inférieur ou égal à 60 secondes ;
    une étape (II) d'étirement du film préétiré à une température d'étirement de Tg - 50 °C à Tg + 50 °C et un rapport d'étirement supérieur ou égal à 1,01 fois et inférieur ou égal à 1,20 fois dans une direction de la largeur pour obtenir un film étiré ; et

une étape (III) de réglage d'une température du film étiré à une température de cristallisation de Mp - 120 °C à Mp pendant un temps de cristallisation inférieur ou égal à 25 secondes tout en maintenant un état où deux bords ou plus du film étiré sont maintenus, pour obtenir le film de résine, dans lequel

Tg représente la température de transition vitreuse du polymère cristallisable qui est observée par un calorimètre différentiel à balayage à une vitesse d'augmentation de la température de 10 °C/min.

6. Procédé de production du film de résine selon la revendication 5, comprenant, après l'étape (III), une étape (IV) de réalisation de retrait thermique du film de résine à une température de relaxation supérieure ou égale à Tg et inférieure ou égale à Mp.

7. Procédé de production d'un film électroconducteur, comprenant une étape de formation d'une couche électroconductrice sur le film de résine selon l'une quelconque des revendications 1 à 3.

# FIG.1

# FIG.2

# FIG.3

# FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3521348 A1
- US 2014104552 A1
- JP 2010038924 A
- US 2007275187 A1
- JP 5283701 B
- JP 2013010309 A
- WO 2016067893 A
- JP 2011118137 A